# EUROPEAN PATENT APPLICATION

(11) **EP 4 542 388 A1**
(43) Date of publication of application: **23.04.2025**
(21) Application number: 24150586.6
(22) Date of filing: 05.01.2024
(51) Int. Cl.: G06F 9/50

(54) **HYPERVISOR-HOSTING-BASED SERVICE MESH SOLUTION**

(30) Priority: 17.10.2023 WO PCT/CN2023/124839
(71) Applicant: VMware LLC, Palo Alto, CA 94304 (US)
(72) Inventor: Lin, Bo, Beijing, 100190 (CN); Zhou, Zhengsheng, Beijing, 100190 (CN); Han, Donghai, Beijing, 100190 (CN); Chen, Dongping, Beijing, 100190 (CN); Liang, Xiao, Beijing, 100190 (CN)
(74) Representative: Dilg, Haeusler, Schindelmann Patentanwaltsgesellschaft mbH

(57) **Abstract**

Some embodiments of the invention provide a method of implementing a virtualization software-based service mesh for a network that includes multiple host computers, each host computer including a set of virtualization software executing a set of application instances. For each host computer, the method deploys, to the set of virtualization software, an application service agent and an application service data plane that includes a set of data plane service mesh levels. The method configures the application service agent to apply policy rules defined for flows associated with the set of application instances to the flows on the application service data plane, and configures the application service data plane to forward the flows for the set of application instances to and from services provided at each data plane service mesh level in the set of data plane service mesh levels according to the policy rules applied by the application service agent.

## Description

### BACKGROUND

Today, with microservice designs on cloud-native applications, one application may include hundreds of services, and each service may have thousands of instances. Each of those instances might be in a constantly-changing state as they are dynamically scheduled by an orchestrator (e.g., Kubernetes). Not only is service communication in this world incredibly complex, it is also a pervasive and fundamental part of runtime behavior. Managing it is vital to ensuring end-to-end performance and reliability. Service mesh is a dedicated infrastructure for facilitating service-to-service communications between services or microservices using a proxy. Service mesh usually takes over all networking traffic in application instances and is then responsible for traffic management (service-discovery, traffic routing, traffic control), observability (metrics, telemetry, tracking, monitoring) and security capabilities.

Most service mesh solutions choose sidecar mode as the base stone (inject several containers into an application instance or pod to intercept application instance's traffic and then proxy them based on policies pulled from control plane). Sidecar pattern gives networking capabilities including service-discovery, traffic-routing, observability, security, and tracing to modern applications that applications are not aware of. However, each pod injected with one or more sidecar containers is an extra resource cost and the design also brings scale, performance and management issues with service containers increasing. Hence, a new service mesh solution is introduced: a hypervisor hosting mode. Offloading the networking infrastructure service from a container level down to a host node level provides high performance, scalability and easy management while owning a finer granularity of traffic control by having the whole traffic picture of containers running on this node. A hypervisor hosting mode is a good supplementary technology along with sidecar mode for more service mesh scenarios.

### BRIEF SUMMARY

Some embodiments of the invention provide a method for providing a virtualization software - based service mesh (e.g., hypervisor-based service mesh) solution for a network that includes multiple host computers that each include a set of virtualization software (e.g., a hypervisor) that executes a set of application instances. The method is performed for each host computer in the network. The method deploys, to the set of virtualization software of the host computer, an application service agent and an application service data plane that includes a set of data plane service mesh levels. The method configures the application service agent to apply policy rules defined for application flows associated with the set of application instances to the application flows on the application service data plane. The method also configures the application service data plane to forward the application flows for the set of application instances to and from services provided by the set of data plane service mesh levels according to the policy rules applied by the application service agent.

In some embodiments, the application service data plane is deployed by implementing the application service data plane as a set of one or more machine instances on the set of virtualization software of the host computer. Examples of machine instances, in some embodiments, include pods, containers, virtual machines (VMs), etc. In other embodiments, the application service data plane is deployed by integrating the application service data plane in a kernel of the set of virtualization software of the host computer. In still other embodiments, the application service data plane is deployed by a combination of implementing the application service data plane as a set of one or more machine instances on the set of virtualization software of the host computer and integrating the application service data plane in a kernel of the set of virtualization software. The application service data plane of some embodiments is also configured to implement a set of data plane services, such as a service discovery service, a load balancing service, a tracing service, and securities services (e.g., IDS (intrusion detection system) services, IPS (intrusion prevention system) services, etc.).

In some embodiments, for each service mesh level of the set of data plane service mesh levels, a distributed DNS (domain name service) proxy server and a distributed load balancer are deployed to the host computer as part of the application service data plane. As part of configuring the application service data plane, in some embodiments, the distributed DNS proxy server is configured to intercept and respond to DNS requests from the set of application instances that are associated with services provided by the service mesh level, and the distributed load balancer is configured to intercept service calls (e.g., application traffic flows destined to services) associated with services provided by the service mesh level and redirect the service calls to service instances on one or more of the plurality of host computers.

In order to configure the application service agent to apply the policy rules, in some embodiments, the application service agent is first configured to receive policy configurations from a centralized application service control plane server, and convert the policy configurations into policy rules. The application service agent of some embodiments is then configured to apply the converted policy rules to the application traffic on the application service data plane by providing the policy rules to a service insertion module of the application service data plane.

In some embodiments, each policy rule includes a set of match attributes (e.g., match attributes corresponding to any part of a flow's five-tuple) and one or more data plane services to be applied to application flows matching the set of match attributes. The service insertion module of the application service data plane of some embodiments identifies policy rules to be applied to packets of the application flows by matching any attributes of a packet's five-tuple identifier to one or more sets of match attributes of one or more policy rules. In some embodiments, each data plane service is associated with a corresponding flag, and the service insertion module sets one or more flags that correspond the data plane services specified by any matched policy rules in headers of packets.

The application service data plane of some embodiments is configured to forward the application flows according to the policy rules provided by the application service agent and applied by the service insertion module by identifying and applying the data plane services specified for the application flows. For example, in some embodiments, the application service data plane is configured to identify the data plane services corresponding to the flags set in the headers of packets belonging to the application flows, and forward the packets to the identified data plane services (e.g., to one or more machines that provide the data plane services). In some embodiments, different policy rules are defined for different levels of the set of data plane service mesh levels, and thus the application service data plane forwards the application flows to and from services provided at each data plane service mesh level according to the policy rules applied by the service insertion module for that data plane service mesh level.

In some embodiments, the set of data plane service mesh levels of the application service data plane includes an infrastructure services first level, a tenant services second level, an application services third level, and an instance services fourth level. The infrastructure services first level of some embodiments includes common services (e.g., provider services) that are visible and accessible to each application instance in the set of application instances on the host computer. In some embodiments, the set of application instances includes a first subset of application instances belonging to a first tenant and a second subset of applications instances belonging to a second tenant, and the tenant services second level includes isolated tenant services for the first and second tenants (e.g., a first set of tenant services for the first subset of application instances of the first tenant and a second set of tenant services for the second subset of application instances of the second tenant), such that the application instances of the first tenant cannot see or access the tenant services of the second tenant, and vice versa.

In addition to including application instances of different tenants, the set of application instances of some embodiments also includes application instances associated with different applications, such as application instances of a first application and application instances of a second application. Accordingly, the application services third level includes different application services for different applications, such as a first set of application services for instances of a first application, and a second set of application services for instances of a second application. Like the tenant services, the different application services are only visible and accessible to instances of the application associated with the application services (e.g., instances of a first application can only see and access application services for the first application, and instances of a second application can only see and access application services for the second application).

In some embodiments, the application instances associated with the same application (e.g., instances of a first application) include application instances that are different versions of the same application. For example, the set of application instances on a host computer of some embodiments include a first subset of application instances that are associated with a first version of a first application, and a second subset of application instances that are associated with a second version of the first application. The different application instance versions, in some embodiments, desire different versions of application services. In other embodiments, application instances that are of the same version still desire different versions of application services. As such, the instance services fourth level includes different versions of application services that are visible and accessible to different instances of the application. For example, a first set of application services for a first instance of an application is a first version of the application services, while a second set of application services for a second instance of the application is a second version of the application services.

The preceding Summary is intended to serve as a brief introduction to some embodiments of the invention. It is not meant to be an introduction or overview of all inventive subject matter disclosed in this document. The Detailed Description that follows and the Drawings that are referred to in the Detailed Description will further describe the embodiments described in the Summary as well as other embodiments. Accordingly, to understand all the embodiments described by this document, a full review of the Summary, Detailed Description, the Drawings and the Claims is needed. Moreover, the claimed subject matters are not to be limited by the illustrative details in the Summary, Detailed Description, and Drawings.

### BRIEF DESCRIPTION OF THE DRAWINGS

The novel features of the invention are set forth in the appended claims. However, for purposes of explanation, several embodiments of the invention are set forth in the following figures.
**Figure 1** illustrates an example overview architecture diagram of a hypervisor-based service mesh solution (e.g., Ark) of some embodiments.
**Figure 2** conceptually illustrates a process for implementing a hypervisor-based service mesh solution, in some embodiments.
**Figures 3A-3B** illustrate diagrams showing an example of multiple applications consuming common services on an infrastructure level of a hypervisor-based service mesh of some embodiments.
**Figures 4A-4B** illustrate diagrams showing an example of a tenant-level of a service mesh of some embodiments.
**Figures 5A-5B** illustrate diagrams showing an example of an application level of a service mesh of some embodiments with multiple services for application-scope-of-use only.
**Figures 6A-6B** illustrate diagrams showing an example of an instance level of a service mesh of some embodiments.
**Figure 7** illustrates a process performed by a service insertion module of the application service data plane of some embodiments to identify policy rules provided by the application service agent that specify data plane services to be applied to packet flows from application instances.
**Figure 8** conceptually illustrates a computer system with which some embodiments of the invention are implemented.

### DETAILED DESCRIPTION

In the following detailed description of the invention, numerous details, examples, and embodiments of the invention are set forth and described. However, it will be clear and apparent to one skilled in the art that the invention is not limited to the embodiments set forth and that the invention may be practiced without some of the specific details and examples discussed.

Some embodiments of the invention provide a new service mesh solution that utilizes a virtualization software (e.g., hypervisor) hosting - based service mesh (e.g., Ark). The virtualization software hosting - based service mesh of some embodiments offloads the local control plane for the application services from sidecar containers to the host node. Additionally, the data plane for the application services (e.g., Ark data plane) is offloaded from sidecar proxies down to the host node, in some embodiments. In some embodiments, the offloaded local control plane for the application services is referred to as the application service agent (e.g., an Ark agent), and the offloaded data plane is referred to as the application service data plane (e.g., Ark data plane).

Some embodiments of the invention provide a method for implementing a virtualization software - based service mesh (e.g., hypervisor-based service mesh, such as Ark) solution for a network that includes multiple host computers that each include a set of virtualization software (e.g., a hypervisor) that executes a set of application instances. The method is performed for each host computer in the network (e.g., a container network). The method deploys, to the set of virtualization software of the host computer, an application service agent and an application service data plane that includes a set of data plane service mesh levels. The method configures the application service agent to apply policy rules defined for application flows associated with the set of application instances to the application flows on the application service data plane. The method also configures the application service data plane to forward the application flows for the set of application instances to and from services provided by the set of data plane service mesh levels according to the policy rules applied by the application service agent.

In some embodiments, the application service data plane is deployed by implementing the application service data plane as a set of one or more machine instances on the set of virtualization software of the host computer. Examples of machine instances, in some embodiments, include pods, containers, virtual machines (VMs), etc. In other embodiments, the application service data plane is deployed by integrating the application service data plane in a kernel of the set of virtualization software of the host computer. In still other embodiments, the application service data plane is deployed by a combination of implementing the application service data plane as a set of one or more machine instances on the set of virtualization software of the host computer and integrating the application service data plane in a kernel of the set of virtualization software. The application service data plane of some embodiments is also configured to implement a set of data plane services, such as a service discovery service, a load balancing service, a tracing service, and securities services (e.g., IDS (intrusion detection system) services, IPS (intrusion prevention system) services, etc.).

In some embodiments, for each service mesh level of the set of data plane service mesh levels, a distributed DNS (domain name service) proxy server and a distributed load balancer are deployed to the host computer as part of the application service data plane. As part of configuring the application service data plane, in some embodiments, the distributed DNS proxy server is configured to intercept and respond to DNS requests from the set of application instances that are associated with services provided by the service mesh level, and the distributed load balancer is configured to intercept service calls (e.g., application traffic flows destined to services) associated with services provided by the service mesh level and redirect the service calls to service instances on one or more of the plurality of host computers.

In order to configure the application service agent to apply the policy rules, in some embodiments, the application service agent is first configured to receive policy configurations from a centralized application service control plane server, and convert the policy configurations into policy rules. The application service agent of some embodiments is then configured to apply the converted policy rules to the application traffic on the application service data plane by providing the policy rules to a service insertion module of the application service data plane (e.g., by storing the policy rules in a respective policy data store of each level of the service mesh).

In some embodiments, each policy rule includes a set of match attributes (e.g., match attributes corresponding to any part of a flow's five-tuple) and one or more data plane services to be applied to application flows matching the set of match attributes. The service insertion module of the application service data plane of some embodiments identifies policy rules to be applied to packets of the application flows by matching any attributes of a packet's five-tuple identifier to one or more sets of match attributes of one or more policy rules. In some embodiments, each data plane service is associated with a corresponding flag, and the service insertion module sets one or more flags that correspond the data plane services specified by any matched policy rules in headers of packets.

The application service data plane of some embodiments is configured to forward the application flows according to the policy rules provided by the application service agent and applied by the service insertion module by identifying and applying the data plane services specified for the application flows. For example, in some embodiments, the application service data plane is configured to identify the data plane services corresponding to the flags set in the headers of packets belonging to the application flows, and forward the packets to the identified data plane services (e.g., to one or more machines that provide the data plane services). In some embodiments, different policy rules are defined for different levels of the set of data plane service mesh levels, and thus the application service data plane forwards the application flows to and from services provided at each data plane service mesh level according to the policy rules applied by the service insertion module for that data plane service mesh level.

In some embodiments, the set of data plane service mesh levels of the application service data plane includes an infrastructure services first level, a tenant services second level, an application services third level, and an instance services fourth level. The infrastructure services first level of some embodiments includes common services (e.g., provider services) that are visible and accessible to each application instance in the set of application instances on the host computer. In some embodiments, the set of application instances includes a first subset of application instances belonging to a first tenant and a second subset of applications instances belonging to a second tenant, and the tenant services second level includes isolated tenant services for the first and second tenants (e.g., a first set of tenant services for the first subset of application instances of the first tenant and a second set of tenant services for the second subset of application instances of the second tenant), such that the application instances of the first tenant cannot see or access the tenant services of the second tenant, and vice versa.

In addition to including application instances of different tenants, the set of application instances of some embodiments also includes application instances associated with different applications, such as application instances of a first application and application instances of a second application. Accordingly, the application services third level includes different application services for different applications, such as a first set of application services for instances of a first application, and a second set of application services for instances of a second application. Like the tenant services, the different application services are only visible and accessible to instances of the application associated with the application services (e.g., instances of a first application can only see and access application services for the first application, and instances of a second application can only see and access application services for the second application).

In some embodiments, the application instances associated with the same application (e.g., instances of a first application) include application instances that are different versions of the same application. For example, the set of application instances on a host computer of some embodiments include a first subset of application instances that are associated with a first version of a first application, and a second subset of application instances that are associated with a second version of the first application. The different application instance versions, in some embodiments, desire different versions of application services. In other embodiments, application instances that are of the same version still desire different versions of application services. As such, the instance services fourth level includes different versions of application services that are visible and accessible to different instances of the application. For example, a first set of application services for a first instance of an application is a first version of the application services, while a second set of application services for a second instance of the application is a second version of the application services.

In some embodiments, the application service agent (e.g., Ark agent) on each host node is a local control plane agent that receives the policy configurations from a central control plane for the application services (e.g., Ark Control Plane), converts the policy configurations into policy rules, and applies the policy rules to application flows on the data plane (e.g., by storing the policy rules in a respective policy data store for each level of the service mesh for use by a service insertion module of the application service data plane). The application services data plane (e.g., Ark data plane) on each host node, in some embodiments, controls and proxies all egress and ingress traffic for application instances on the host node, as mentioned above.

The services provided by the hypervisor hosting - based service mesh (or hypervisor-based service mesh) of some embodiments are distributed and, in some embodiments, implemented with a layered design. In order to meet the service traffic needs of applications, the application services data plane supports a variety of services including, but not limited to, service-discovery, load balancing, authentication, and tracing. Each function of these services is decoupled and designed with a distributed concept for logically easy management and service reuse considerations. Also, from the view of the application instance, the application services data plane of some embodiments provides customized service mesh services with a layers design (e.g., a docker image), as mentioned above, for flexibility and resource reuse.

In some embodiments, the application services data plane supports multi-tenancy and provides multi-tenancy data plane service designs for isolation. These multi-tenancy data plane service designs include services that have isolation requirements on infrastructure, tenant, application, and instance levels, according to some embodiments. In some embodiments, the multi-tenancy data plane service designs require data plane services and multi-tenancy support to provide datapath/visibility levels of isolation. Each multi-tenancy data plane service design is a logic concept that is implemented in the control plane for visibility isolation, or in the data plane for whole datapath isolation, in some embodiments.

Because one application instance can require different levels of service use, some embodiments provide policy-based rules for data plane services routing for traffic proxying. For example, when an application instance for an application, "Appl", calls the application level "app-service-1" for function use and infrastructure level of "db-service" for database access, the "App1" instance needs to be attached to both services (i.e., the application level service "app-service-1" and the infrastructure level service "db-service"). Using the five-tuple of the traffic flow sent from the application instance and the network interface information of the traffic flow, the data plane of some embodiments obtains the metadata of the application instance for the application "App1" and then applies the corresponding rules to proxy the traffic flow in the data plane services chain.

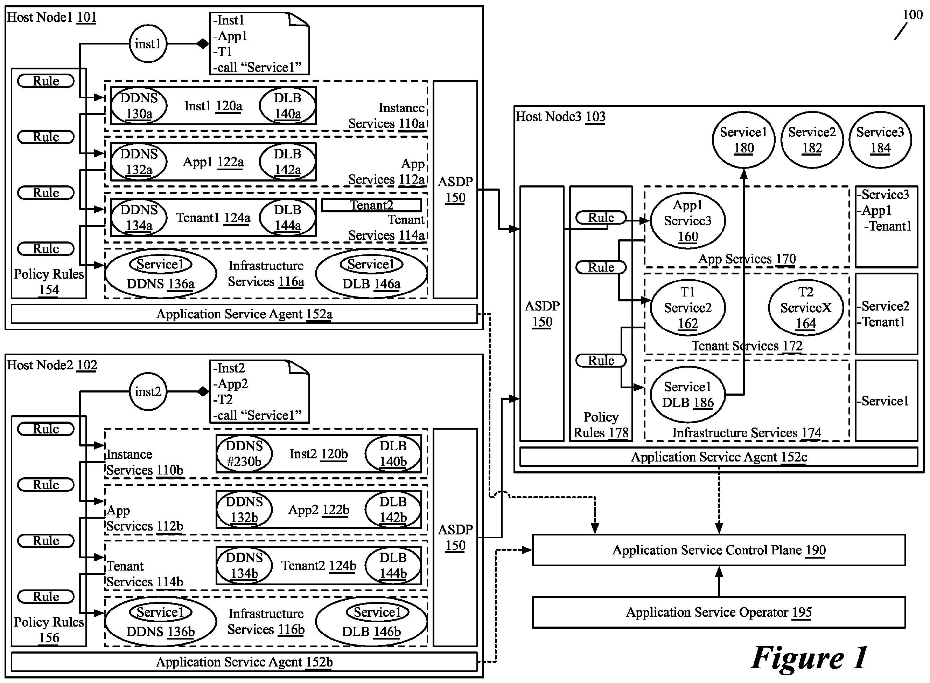

The hypervisor-based service mesh solution includes four components: the application service control plane, the application service operator, the application service agent (e.g., local control plane), and the application service data plane. **Figure 1** illustrates an example overview architecture diagram 100 of a hypervisor-based service mesh solution (e.g., Ark) of some embodiments. As shown, the diagram 100 includes three host nodes 101, 102, and 103, as well as an application service control plane 190 and application service operator 195.

The application service operator 195 is used to receive metadata of instances, including service instances and application instances, from an orchestrator (e.g., a network orchestrator of a network orchestration platform, such as a Kubernetes) and to convert the retrieved metadata into policies in the application service control plane 190. In some embodiments, the application service operator 195 is also responsible for monitoring the metadata of service instances and application instances in the orchestration platform. Examples of orchestration platforms utilized in some embodiments include Kubernetes, OpenShift, VMware Tanzu Kubernetes Grid, and an IaaS (infrastructure as a service) with an orchestration function (e.g., VMC (VMware Cloud) on AWS (Amazon Web Services) with vRealization Automation).

In some embodiments, each service declares itself on infrastructure, tenant, application, and instance levels. Each application, in some embodiments, claims its desired services. Each application instance is associated with a respective set of metadata that includes an IP address of the application instance, an application associated with the application instance, a tenant to which the application instance belongs, an instance network interface (e.g., a virtual interface or a container interface), and host node information of the host node to which the application instance is deployed.

Each set of metadata for each instance is received by the application service operator 195, in some embodiments, and converted into service mesh function APIs to the application service control plane 190. In some embodiments, the application service operator 195 is able to run anywhere so long as the application service operator 195 has access to the instance metadata and the application service control plane 190 for management purposes. The application service operator 195 in some embodiments is implemented as a single process running in a container on a host, or as a cluster node.

In some embodiments, the application service control plane 190 is deployed in a centralized way. The application service control plane 190 in some embodiments is designed as a cluster for high availability, scalability, and performance concerns. The application service control plane 190 is responsible for receiving function requests from the application service operator 195, converting the received function requests into networking configurations, and spanning the networking configurations to their corresponding application service agent, according to some embodiments.

In some embodiments, the application service control plane 190 is implemented as a single process running in a container on a host computer, or as a cluster node. In some embodiments, the application service control plane 190 is scaled out for the management of application service agents deployed to host nodes (e.g., application service agents 152a-152c). In some embodiments, sharding is also done on the applications service control plane 190 for performance considerations. The application service control plane 190, in some embodiments, abstracts service mesh functions, such as service-discovery, load balancing, tracing, and securities, which are directly used by the application service operator 195. In some embodiments, these services are distributed and span multiple nodes.

The application service control plane 190 in some embodiments also has logic network functions, such as a switch, router, DNS, load balancer, firewall engine, and one or more security engines with security capabilities (e.g., IDS (intrusion detection system), IPS (intrusion prevention system), etc.). The application service operator 195 is responsible for converting service mesh functions to networking functions. As such, some embodiments reuse certain appliances and/or controllers (e.g., VMware, Inc.'s NSX unified appliance, Antrea Controller, Calica networking controller, and Istio Control Plane) as the application service control plane 190. In some embodiments, the application service control plane 190 runs anywhere (i.e., at any location) as long as it is accessible to the application service operator 195 and application service agents 152a-152c.

An application service agent is deployed per host node to receive policies from the application service control plane 190 and then apply policies on the application service data plane. In some embodiments, separate policies are defined for each level of the service mesh, and the application service agent applies the policies on the application service data plane by storing the policies of each service mesh level in a respective policy data store of the service mesh level for retrieval and use by a service insertion module (not shown) of the application service data plane. As shown, host node1 101 includes an application service agent 152a, host node2 102 includes an application service agent 152b, and the host node3 103 includes an application service agent 152c. The application service agents 152a-152c are responsible for receiving policy configurations from the application service control plane 190, converting the policy configurations into policy rules, and applying the policy rules to the application service data plane 150.

In some embodiments, each application service agent 152a-152c is a single process on a host, or a DaemonSet running as a container. The application service agent 152a-152c is datapath protocol agnostic, in some embodiments, and passes the policy configurations received from the application service control plane 190 through to the application service data plane 150. In other embodiments, the application service agent 152a-152c acts as a protocol analyzer and converts policy rules into a protocol agnostic policy rules for the application service data plane 150.

The application service agents 152a-152c of some embodiments have a management connection with the application service control plane 190. In some embodiments, the connection between an application service agent 152a-152c and the application service control plane 190 is maintained through keep-alive RPCs (remote procedure calls), or through REST API calls. The application service agent 152a-152c in some embodiments is also responsible for receiving metadata of instances (e.g., application instances and service instances) and sending the received metadata to the application service control plane 190 for fine granularity of data plane management.

In addition to the application service agents 152a-152c, the application service data plane 150 is also deployed per host node. The application service data plane 150 on each host 101-103 intercepts and manages all traffic of the host's application instances, according to some embodiments. The application service data plane 150, in some embodiments, is implemented as an instance (e.g., a machine instance, such as a VM instance, pod instance, container instance, etc.) running on each host. In other embodiments, the application service data plane 150 is integrated into a kernel of a hypervisor (i.e., virtualization software) executing on a host computer. In some embodiments, the application service data plane 150 is responsible for receiving policy rules from the application service agent 152a-152c deployed to the same host node as the application service data plane 150, and for managing the real datapath traffic.

In some embodiments, the application service data plane 150 is a single multi-tenancy supported process running on the user-space or kernel-space of a host (e.g., is implemented in the kernel space of each host node), while in other embodiments, the application service data plane 150 is a DaemonSet running as a container. In still other embodiments, the application service data plane 150 is implemented in the kernel space of the host in combination with user-space applications, processes, containers, virtual appliances, etc. Multiple processes run on the host node, in some embodiments, for performance, scale, and easy multi-tenancy concerns.

The application service data plane 150 of some embodiments intercepts all egress and ingress traffic flows, and applies proxying functions to the intercepted flows. In some embodiments, the application service data plane 150 accomplishes these functionalities using a variety of technologies, such as iptables (i.e., a user-space utility program that allows administrators to configure IP packet filter rules of a kernel firewall), DPDK (data plane development kit), or eBPF (i.e., the current Berkeley Packet Filter (BPF)), based on needs.

In some embodiments, the application service data plane 150 implements data plane services including service-discovery, load balancing, tracing, and securities with multi-tenancy support corresponding to a variety of levels of services. These data plane services are realized in a single process with multi-tenancy support, or in multiple processes, according to some embodiments. The application service data plane 150 of some embodiments implements policy rules to match instance traffic to corresponding data plane services. In some embodiments, each data plane service is associated with one or more priority and/or visibility flags that are used to identify the data plane service associated with the instance traffic, while in other embodiments these functions are extracted into a single data plane service module.

In some embodiments, connections among the application service data plane 150 are implemented by RPC, BGP (border gateway protocol), or an overlay protocol (e.g., Geneve). For some data plane services, the application service data plane 150 in some embodiments intercepts and manages the egress traffic, while passing the ingress traffic through. Advantages for this mode, in some embodiments, include (1) easy management (e.g., the service mesh can only consider the client-side proxy), (2) higher performance (e.g., the server endpoint does not require extra traffic jumping and handling), and (3) more flexibility on the server-side endpoint. There is no need to include the server-side into the service mesh and in some embodiments, the server-side is in different clusters or operates as a host application outside of the orchestration platform.

In some embodiments, data plane services are implemented natively, such as for service-discovery and traffic-routing services, or by some legacy networking functions, such as for DNS and load balancer services. Each data plane service is implemented flexibly (e.g., into kernel-space or user-space), in some embodiments, using a single common process or a specific process, container, or VM to meet certain needs, such as isolation needs, performance needs, scale needs for easy deployment, and feature-richness needs. Data plane services in some embodiments are implemented separately with a microservice design or into a monolithic application. In some embodiments, one application instance is attached to multiple data plane services.

There are four levels of data plane services isolation, in some embodiments, including an infrastructure level, tenant level, application level, and instance level. For example, in addition to the application service agent 152a and the application service data plane 150, the host node1 101 also includes infrastructure services 116a, tenant services 114a, application services 112a, and instance services 110a. Similarly, host node2 102 includes infrastructure services 116b, tenant services 114b, application services 112b, and instance services 110b in addition to the application service agent 152b and application service data plane 150.

In some embodiments, each service level has its own service forwarding plane (e.g., has its own unique service forwarding plane VNI (virtual network identifier)). In other embodiments, different service levels share the same service forwarding plane. In these other embodiments, a service insertion module that processes different service policies for the different service levels to perform the service lookup for each level first looks up the infrastructure service policies for a packet and sends the packet to any services specified by any matching infrastructure policies along the shared service forwarding plane. When this service insertion module gets the packet back after the packet has been processed by the specified services, in some such other embodiments, the service insertion module looks up the tenant service policies, sends the packet to the services specified by any matching tenant policies along the same shared service forwarding plane, and so on for each service level.

On the host node1 101, the instance services 110a includes instance services 120a for a first instance, "inst1", of a first application; the application services 112a includes application services 122a for the first application, "appl"; and the tenant services 114a includes tenant services 124a for a first tenant, "tenant1". On the host node2 102, the instance services 110b includes instance services 120b for a second instance, "inst2", of a second application; the application services 112b includes application services 122b for the second application, "app2"; and the tenant services 114b includes tenant services 124b for a second tenant, "tenant2". The respective infrastructure services 116a and 116b on each host 101 and 102 are accessible to all instances said respective hosts, and as such, do not include isolated services on per-tenant, per-application, or per-instance bases.

Like the host nodes 101-102, the host node3 103 includes an application service agent 152c and the application service data path 150. Additionally, the host node3 103 includes infrastructure services 174, tenant services 172, and application services 170 for processing infrastructure-level, tenant-level, and application-level service calls from application instances on the host nodes 101-102, and also hosts a set of service instances that include Service1 instance 180, Service2 instance 182, and instance Service3 184. The infrastructure services level 174 of the host node3 103 includes a DLB 186 for redirecting service calls for Service1 to the Service1 instance 180. The tenant services level 172 includes a Service2 162 for tenant "Tenant1" (or "T1") and a ServiceX 164 for tenant "Tenant2" (or "T2"). Lastly, the application services level 170 includes a Service3 160 for an application "App1".

In this example, Service1 is an infrastructure-level service (e.g., a common service) that is applied on all host nodes of the cluster (e.g., host nodes 101 and 102) and visible to all application instances on said host nodes of the cluster. As such, traffic load balancing for Service1 is implemented as a distributed mode and spans multiple nodes in which some instances seek Service1. Service2 is a tenant-level service that is applied on all host nodes that include instances belonging to "Tenant1" and is only visible to these instances belonging to "Tenant1". Service3 is an application-level service that is applied on host nodes that include application instances for "App1". In some embodiments, the instance level of service is similar with the current sidecar mode and, in some embodiments, is implemented by a sidecar pattern.

Each of the services 120a-120b, 122a-122b, 124a-124b, and 116a-116b on the host nodes 101-102 includes a respective DDNS (distributed DNS) service (e.g., DDNS 130a-130b, 132a-132b, 134a-134b, and 136a-136b) and a respective DLB (e.g., DLB 140a-140b, 142a-142b, 144a-144b, and 146a-146b). Each DDNS service 130a-136b automatically updates DNS records when an IP address changes, in some embodiments, while each DLB 140a-146b load balances traffic destined to the services of that level across instances of the services of that level.

Different levels of the data plane services provide maximum of services reuse. In some embodiments, one distributed DNS proxying per host is enough for the infrastructure level of the service-discovery function. The distributed DNS proxying intercepts all matched DNS queries from applications and then responds with infrastructure DLB VIPs (virtual IPs). In some embodiments, two applications share the same DLB instance for the infrastructure service which saves resource costs dramatically. In some embodiments, datapath connections are reduced from M (number of apps on the node) * N (number of services applications call) to O (number of host nodes holding services).

Each of the host nodes 101-103 has one or more policy rules that are based on policy configurations received from the application service control plane 190. For example, host node1 101 includes policy rules 154, host node2 102 includes policy rules 156, and host node3 103 includes policy rules 178. The policy rules of some embodiments are used for forwarding application traffic flows to the appropriate data plane service for networking proxying. In some embodiments, these policy rules are implemented as a separate data plane service forwarding module, such as a rules-based Layer 7 (L7) load balancing module, or are tightly integrated into data-plane services. From the view of an application instance, the application service data plane 150 provides customized service mesh services with a layers design (e.g., like a docker image).

In some embodiments, there are policy-based rules on the data plane service chain to forward the traffic. For example, traffic that is used to call Service1 from "inst1" and "inst2" (i.e., application instance 1 and application instance 2) is both matched to the infrastructure level of the rule with Service1, and sent outbound to the Service1 instance 180 on host node3 103. The inbound Service1 traffic to the host node3 103 from the instances "inst1" and "inst2" on host nodes 101-102 is then matched to the Service1 rule and redirected by the Service1 DLB 186 of the infrastructure services 174 on the host node3 103 to the real Service1 instance 180, as illustrated.

The hypervisor-based service mesh solution in some embodiments is naturally adopted by both the container and the virtual machine. In some embodiments, the hypervisor-based service mesh solution has a whole view of networking traffic conditions and implements finer granularity of traffic control of instances based on this view. For instance, some embodiments have a better traffic balance of App1 (50%) and App2 (50%) requesting for Service1 when a calling race occurs.

In addition to the benefit of natural adoption by both the container and virtual machine, there are many other advantages to the hypervisor-based service mesh solution architecture, in some embodiments. For example, no sidecar containers are needed for the hypervisor-based service mesh solution architecture because in some embodiments, both the data plane and the control plane of said architecture are offloaded to the host node, and reused by multiple hosted containers. In some embodiments, the application service control plane 190 has easier management on the host level of the application service agents in which the management scale is greatly reduced. The application service data plane is designed per host node, as described above, and the implementation is very flexible. Some embodiments use a combination of the hypervisor kernel module and virtual appliances/containers, which makes it more flexible and benefit from both the efficiency of the kernel and the feature richness of the user space applications.

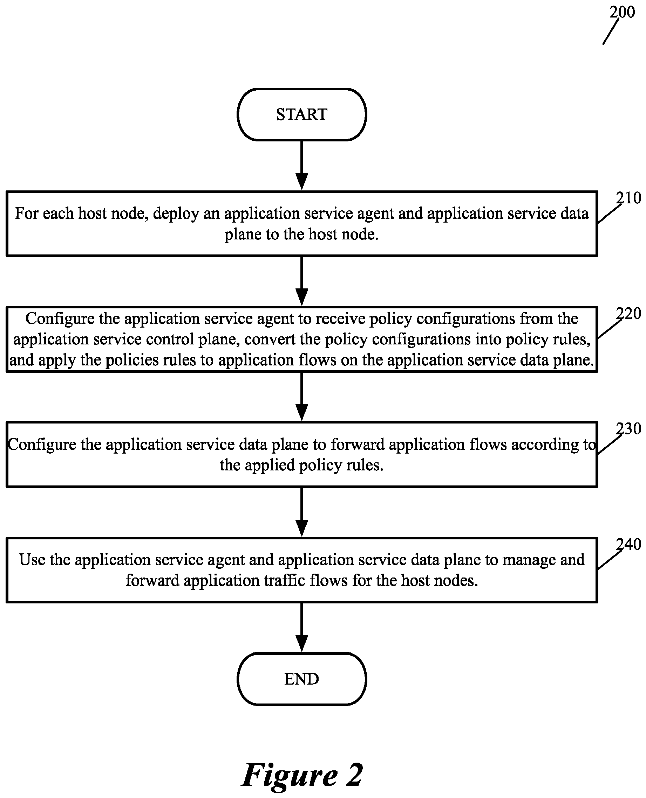

**Figure 2** conceptually illustrates a process 200 for implementing a hypervisor-based service mesh solution, in some embodiments. The process 200 will be described with references to the diagram 100 described above. The process 200 starts when, for each host node, the process deploys (at 210) an application service agent and application service data plane to the host node. For instance, each of the host nodes 101-103 in the diagram 100 includes the application service data plane 150, as well as a respective application service agent 152a-152c.

The process 200 configures (at 220) the application service agent to receive policy configurations from the application service control plane, convert the policy configurations into policy rules, and apply the policy rules to application flows on the application service data plane. In some embodiments, the application service agent is configured to apply the policy rules by storing the policy rules in respective policy data stores for each level of the service mesh where the policy rules can later be retrieved and used by a service insertion module of the application service data plane. In the diagram 100, each host node 101-103 also includes policy rules (e.g., 154, 156, and 178) that are generated and used by the application service agents 152a-152c as well as the application service data plane 150 to properly forward application traffic flows to and from services at various levels of the service mesh (e.g., infrastructure, tenant, application, and instance levels).

The process 200 configures (at 230) the application service data plane to forward application flows according to the applied policy rules. More specifically, the application service data plane on each host node in some embodiments is configured to intercept and manage all the ingress and egress traffic for application instances on that host node. In some embodiments, the application service data plane receives policy rules from the application service agent on the same host node for use in managing the intercepted traffic. For example, in some embodiments, the application service agent applies the policy rules to the application traffic by storing the policy rules in respective policy data stores of each service mesh level for use by a service insertion module of the application service data plane. The service insertion module of some embodiments identifies applicable policy rules and applies the identified policy rules to the application traffic.

The process 200 uses (at 240) the application service agent and application service data plane to manage and forward application traffic flows for the host nodes. Once the hypervisor-based service mesh has been implemented (i.e., the components, including the application service agents and application service data plane, have been implemented), the service mesh is used to forward service traffic for application instances on the host nodes.

In the diagram 100 for example, when an application instance on the host node 101 sends a DNS request for infrastructure service "Servicel", the DNS request is intercepted by the DDNS 136a of the infrastructure services 116a. The DDNS 136a then responds to the DNS request with a VIP for the requested "Servicel", and the requesting application instance uses the VIP for "Service1" to send a service call for the infrastructure service "Service1". The service call is intercepted by the infrastructure service DLB 146a, which sends the service call (e.g., over a network using a network connection) to the host node 103 that hosts Service1 instance 180. At the host node 103, the service call is received by the Service1 DLB 186 of the infrastructure services 174, and redirected to the Service1 instance 180. Following 240, the process 200 ends.

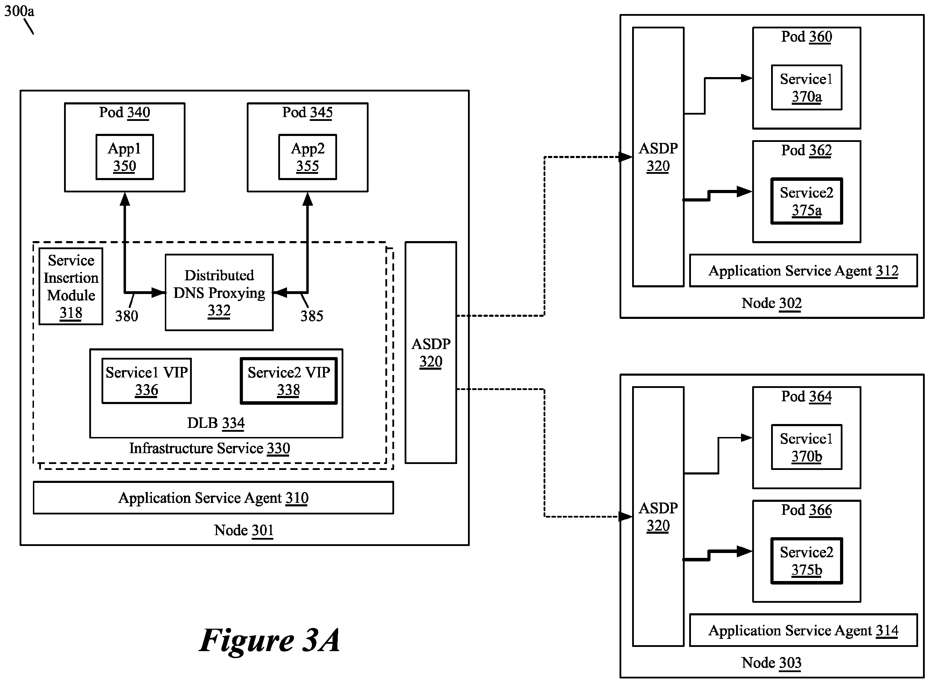

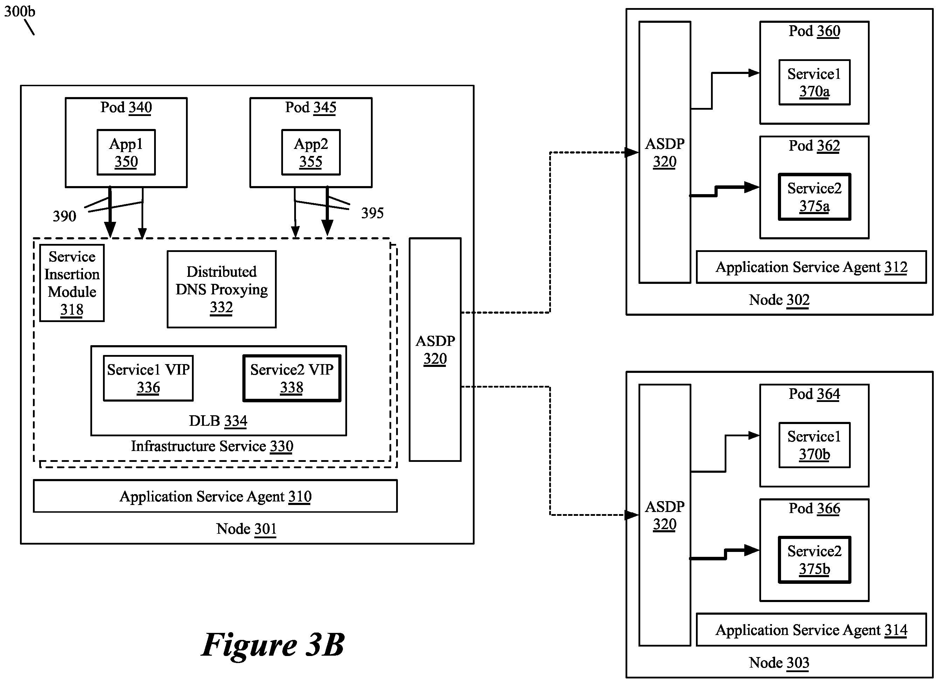

**Figures 3A-3B** illustrate diagrams 300a and 300b showing an example of multiple applications consuming common services on an infrastructure level of a hypervisor-based service mesh of some embodiments. As shown, each diagram 300a and 300b includes three host nodes 301, 302, and 303. Each host node 301-303 includes a respective application service agent 310, 312, and 314, as well as the application service data plane 320.

The host node 301 in each diagram 300a and 300b also includes an infrastructure service 330 and pods 340 and 345. The infrastructure service 330 includes a service insertion module 318, a distributed DNS proxying 332, and a DLB 334. As shown, the DLB 334 includes a Service1 VIP 336 and a Service2 VIP 338 associated with first and second services, respectively, for which the DLB 334 redirects and distributes traffic. The host node 302 includes a pod 360 for executing a Service1 instance 370a and a pod 362 for executing a Service2 instance 375a, while the host node 303 includes a pod 364 for executing a Service1 instance 370b and a pod 366 for executing a Service2 instance 375b.

To configure and realize the services and application, Service1 first declares it is providing common service "service-1" having an associated backend service "clusterservice-1-vip". The application service operator (not shown) receives metadata including service-discovery information "service-1 to cluster-service-1-vip", and load balancing information from "cluster-service-1-vip", and subsequently calls the application service control plane (not shown). The application service control plane creates (1) a DLB instance 334 ("dlb-service") in which the Service1 VIP 336 is "cluster-service-1" and members are IP addresses of Service1's replicas (i.e., IP addresses of the Service1 instances 370a-370b), and (2) a DNS instance 332 and a DNS record A that maps "service-1" to "cluster-service-1-vip".

Next, Service2 declares it is providing common service "service-2" having an associated backend service "cluster-service-2-vip". The application service operator (not shown) receives metadata including service-discovery information "service-2 to cluster-service-2-vip", and load balancing information from "clusterservice-2-vip", and again calls the application service control plane (not shown). The application service control plane reuses the infrastructure DLB instance 334 ("dlb-service") and adds the Service2 VIP 338 as "cluster-service-2" with an associated members list of the IP addresses Service2's replicas (i.e., IP addresses of the Service2 instances 375a-375b). The application service control plane also reuses the infrastructure DNS instance 332 and creates record B that maps "service-2" to "cluster-service-2-vip".

After the services have been realized and configured, App1 350 is then deployed to the pod 340 on one node 301. The application service control plane (not shown) automatically pushes the infrastructure DNS and DLB instances 332 and 334 to the application service agent 310 of the node 301. In the diagram 300a, App1 350 sends a DNS query for Service1 and/or Service2 (e.g., as represented by line 380). The DNS query is intercepted by the infrastructure DNS 332, which matches the request for Service1 to the "service-1" DNS record A and/or matches the request for Service2 to the "service-2" DNS record B, and responds (e.g., as represented by line 380) with "cluster-service-1" (i.e., the VIP 336) and/or "cluster-service-2" (i.e., the VIP 338).

Similarly, App2 355 sends a DNS query for Service1 and/or Service2 (e.g., as represented by line 385). The DNS query from App2 355 is also intercepted by the infrastructure DNS 332, which matches the request for Service1 to the "service-1" DNS record A and/or matches the request for Service2 to the "service-2" DNS record B, and responds (e.g., as represented by line 385) with "cluster-service-1" (i.e., the VIP 336) and/or "cluster-service-2" (i.e., the VIP 338).

Next, in the diagram 300b, after receiving the VIP for the requested Service1 and/or the VIP for the requested Service2, App1 350 then calls "service-1" using the "cluster-service-1" and/or calls "service-2" using the "cluster-service-2" (e.g., as represented by the line 390), while App2 355 also calls "service-1" using the "cluster-service-1" and/or calls "service-2" using the "cluster-service-2" (e.g., as represented by the line 395). In some embodiments, the service traffic is first intercepted by service insertion module 318 to determine whether any policy rules defined for the infrastructure service level are to be applied to the service traffic, and apply those policies, as will be further described below. In some embodiments, the service insertion module 318 is the application service data plane component that matches the flow attributes of a packet (e.g., the five-tuple identifier) to match attributes of the policy rules in order to identify what data plane services should be applied to the packet for the different service levels as specified by the matched policy rule(s).

After interception and processing by the service insertion module 318, the service traffic from App1 350 and App2 355 is intercepted by the infrastructure DLB 334, which then sends out the intercepted service traffic to the corresponding Service1 instances (e.g., Service1 instances 370a-370b executing in respective pods 360 and 364 of respective host nodes 302 and 303), and/or to the corresponding Service2 instances (e.g., Service2 instances 375a-375b executing in respective pods 362 and 366 of respective host nodes 302 and 303).

In some embodiments, the application traffic flows are sent over a network (e.g., intervening network fabric) via a network connection between the host nodes. In some embodiments, the host nodes are sets of virtualization software (e.g., hypervisors) that execute on different physical host computers, and the intervening network fabric includes a private network (e.g., an MPLS (multiprotocol label switching) network), or includes one or more public networks, such as the Internet and/or one or more networks of one or more public clouds. In other embodiments, the host nodes are host machines executing on the same physical host computer, and the intervening network fabric is a software switch on the host computer for connecting the nodes to each other and to network elements external to the host computer. In still other embodiments, the intervening network fabric includes a combination of public and private networks (such as those mentioned above). The network, in some embodiments is an internal network (i.e., the traffic does not traverse any external networks).

The intervening network fabric of some embodiments includes wired or wireless connections, various network forwarding elements (e.g., switches, routers, etc.), etc. In some embodiments, these connections are established over links that include wired and wireless links, point-to-point links, broadcast links, multipoint links, point-to-multipoint links, public links, and private links (e.g., MPLS links). The wired links of some embodiments can include, e.g., coaxial cables and fiber optic cables.

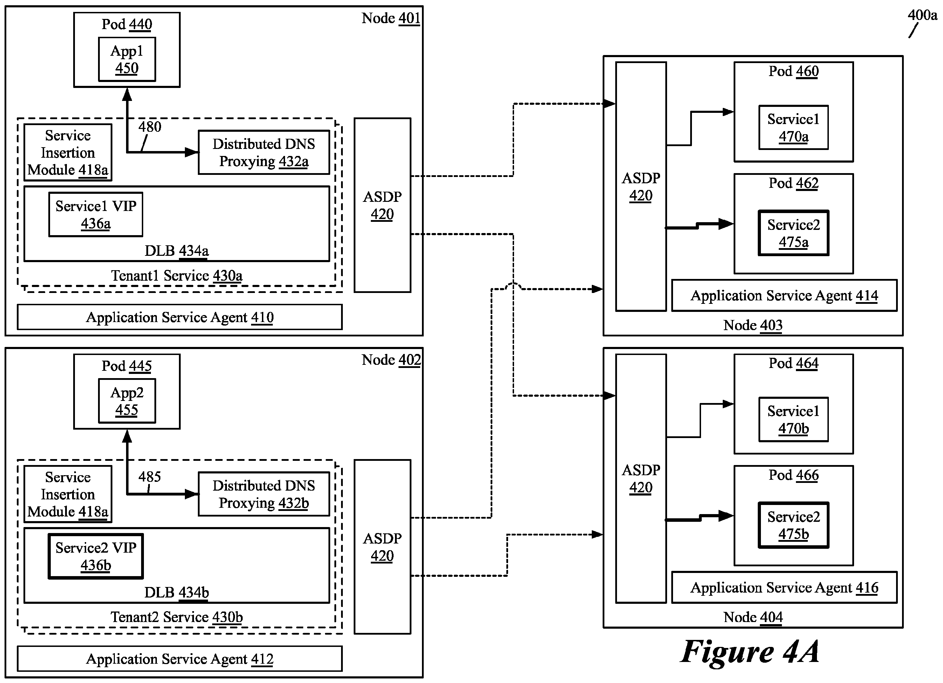

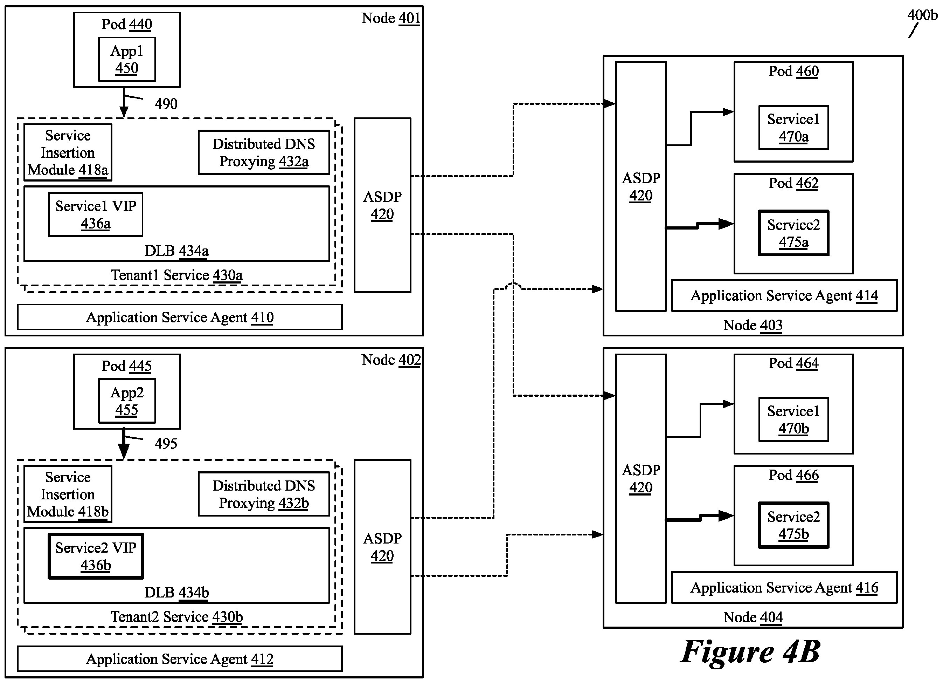

**Figures 4A-4B** illustrate diagrams 400a and 400b showing an example of a tenant-level of a service mesh of some embodiments. As shown, each diagram 400a and 400b includes four host nodes 401, 402, 403, and 404. Each host node 401-404 includes the application service data plane 420, as well as a respective application service agent 410, 412, 414, and 416.

The host node 401 in each diagram 400a and 400b also includes tenant services 430a for "Tenant1" and a pod 440 that executes an App1 instance 450. The tenant services 430a for "Tenant1" includes a service insertion module 418a, a distributed DNS proxying 432a, and a DLB 434a. The DLB 434a includes a Service1 VIP 436a that corresponds to a Service1 that is visible only to application instances belonging to Tenant1. Similarly, the host node 402 includes tenant services 430b for "Tenant2" and a pod 445 that executes an App2 instance 455. The tenant services 430b for "Tenant2" includes a service insertion module 418b, a distributed DNS proxying 432b, and a DLB 434b. The DLB 434b includes a Service2 VIP 436b that corresponds to a Service2 that is visible only to application instances belonging to Tenant2.

Each of the other nodes 403 and 404 in the diagrams 400a and 400b are used to execute the service instances for the tenant services. The host node 403 includes a pod 460 that executes a Service1 instance 470a for Tenant1, and a pod 462 that executes a Service2 instance 475a for Tenant2. The node 404 includes a pod 464 that also executes a Service1 instance 470b for Tenant1, and a pod 466 that also executes a Service2 instance 475b for Tenant2.

To realize and configure the services, Service1 declares it is providing Tenant1 service "service-1" with an associated backend service "cluster-service-1-vip". The application service operator (not shown) receives metadata including service-discovery information "service-1 to cluster-service-1-vip", and load balancing information from "clusterservice-1-vip". The operator then calls the application service control plane (not shown), which creates a DLB instance 434a ("dlb-service-tenant1") and adds a VIP "cluster-service-1" with members that include IP addresses of Service1's replicas. The application service control plane also creates a DNS instance 432a ("ddns-service-tenant1") and a record A that maps "service-1" to "cluster-service-1-vip". The application service control plane marks these services as only accessible by Tenant1 instances.

Next, Service2 declares it is providing Tenant2 service "service-2" with an associated backend service "cluster-service-2-vip". The application service operator (not shown) receives metadata including service-discovery information "service-2 to cluster-service-2-vip" and load balancing information from "clusterservice-2-vip". Then, the application service operator calls application service control plane (not shown), which creates (1) a DLB instance 434b ("dlb-service-tenant2") in which the VIP for Service2 is "cluster-service-2" and members include IP addresses of Service2's replicas, and (2) a DNS instance 432b ("ddns-service-tenant2") and creates a record B that maps "service-2" to "cluster-service-2-vip". The application service control plane marks these services as only accessible by Tenant2 instances.

After the services are realized and configured, App1 450 is deployed to the pod 440 on the host node 401 with "Tenant1" scope. The application service control plane automatically pushes Tenant1 DNS and DLB instances 432a and 434a to the application service agent 410 of the host node 401. App2 455 is then deployed to the pod 445 on the host node 402 with "Tenant2" scope, and the application service control plane automatically pushes Tenant2 DNS and DLB instances 432b and 434b to the application service agent 412 on the host node 402.

In the diagram 400a, App1 450 sends a DNS query for Service 1 (e.g., as represented by the line 480), which is intercepted by the tenant1 DNS 432a. The tenant1 DNS 432a matches the request for Service1 to the "service-1" DNS record A, and responds (e.g., as represented by the line 480) with the "cluster-service-1" VIP (i.e., VIP 436a). Similarly, App2 455 sends a DNS query for Service2 (e.g., as represented by the line 485), which is intercepted by the tenant2 DNS 432b. The tenant2 DNS 432b matches the request for Service2 to the "service-2" DNS record B, and response (e.g., as represented by the line 485) with the "cluster-service-2" VIP (i.e., VIP 436b).

In the diagram 400b, App1 450 uses the received "cluster-service-1" VIP to call "service-1" (e.g., as represented by the line 490), while App2 455 uses the received "cluster-service-2" VIP to call "service-2" (e.g., as represented by the line 495). The service insertion modules 418a and 418b intercept the service traffic from App1 450 and App2 455, respectively, to determine whether any policy rules are to be applied to the service traffic (e.g., policy rules that specify one or more data plane services to be applied to packets of the service traffic flows), and apply those policies to the service traffic.

After the service insertion modules 418a and 418b have processed the respective service traffic, the service traffic from App1 450 is intercepted by the tenant1 DLB 434a, which then sends out the intercepted traffic to the corresponding Service1 instances 470a-470b executing in respective pods 460 and 464 on respective host nodes 403 and 404, and the service traffic from App2 455 is intercepted by the tenant2 DLB 434b, which then sends out the intercepted traffic to the corresponding Service2 instances 475a-475b executing in respective pods 462 and 466 on respective host nodes 403 and 404.

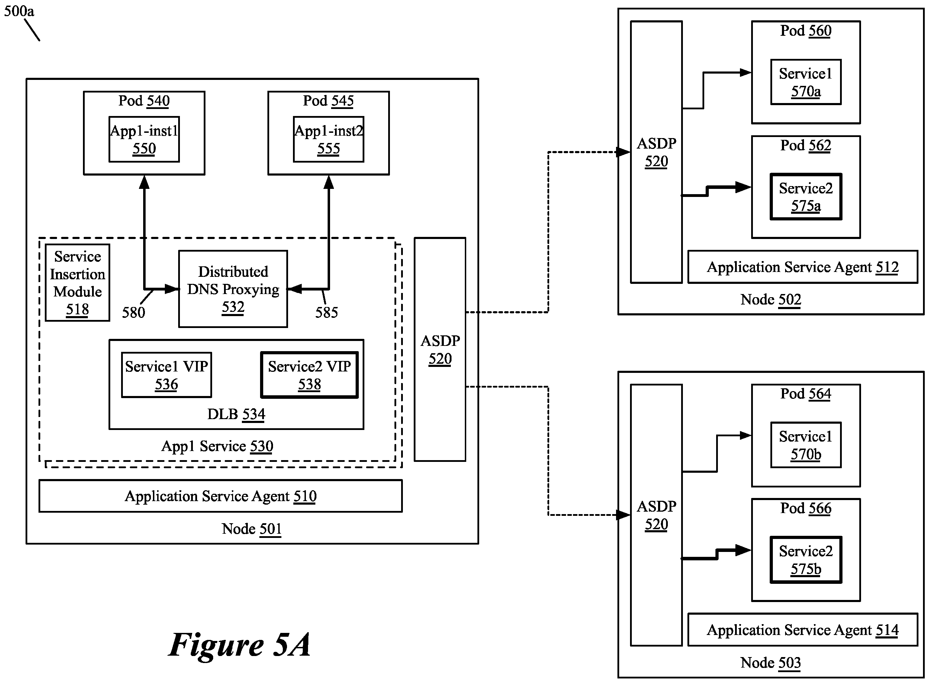

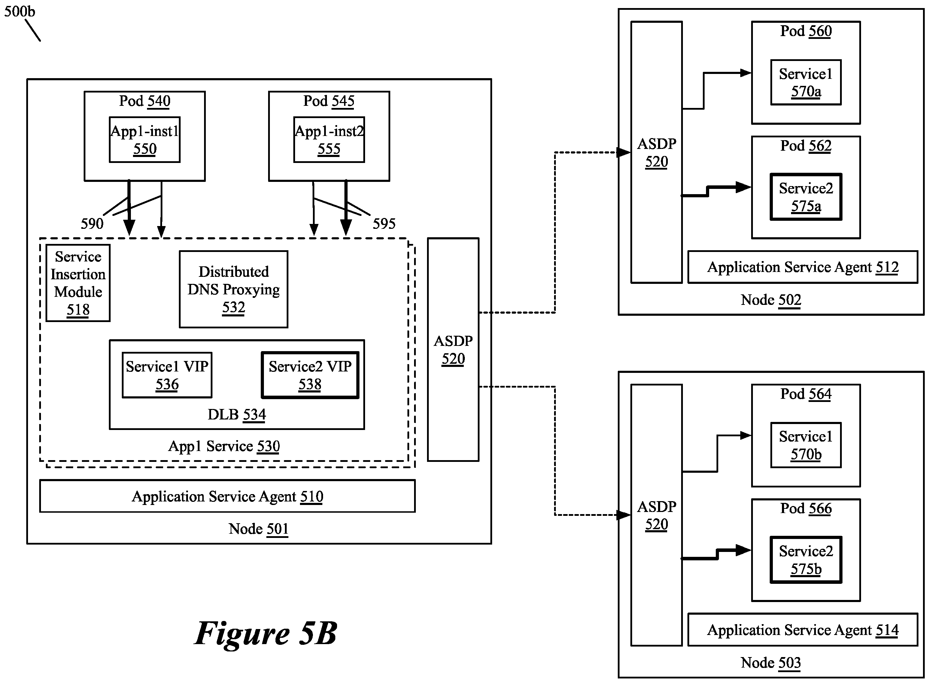

**Figures 5A-5B** illustrate diagrams 500a and 500b showing an example of an application level of a service mesh of some embodiments with multiple services for application-scope-of-use only. As shown, each diagram 500a and 500b includes host nodes 501, 502, and 503. Each host node 501-503 includes the application service data plane 520 and a respective application service agent 510, 512, and 514.

The host node 501 in each diagram 500a and 500b also includes an App1 service 530 for providing services for a first application "App1", and pods 540 and 545 for executing two App1 instances, App1-inst1 550 and App1-inst2 555, respectively. The App1 service 530 includes a service insertion module 518, a distributed DNS proxying 532, and a DLB 534 that redirects and distributes traffic associated with Service1 VIP 536 and Service2 VIP 538. The host node 502 includes a pod 560 that executes a Service1 instance 570a and a pod 562 that executes a Service2 instance 575a. The host node 503 includes a pod 564 that executes a Service1 instance 570b and a pod 566 that executes a Service2 instance 575b.

To realize and configure the application services, Service1 declares it is providing an application service "service-1" for App1 with an associated backend service "cluster-service-1-vip". The application service operator (not shown) receives metadata including service-discovery information "service-1 to cluster-service-1-vip" and load balancing information from "clusterservice-1-vip". The application service operator then calls the application service control plane (not shown), and the application service control plane creates a DLB instance 534 ("dlb-service-app1") in which the Service1 VIP is "cluster-service-1" with members that include IP addresses of Servicel's replicas. The application service control plane then creates a DNS instance 532 ("ddns-service-app1") and creates a record A that maps "service-1" to "cluster-service-1-vip".

Next, Service2 declares it is providing an application service "service-2" for App1 with an associated backend service "cluster-service-2-vip". The application service operator (not shown) receives metadata including service-discovery information "service-2 to cluster-service-2-vip" and load balancing information from "clusterservice-2-vip". The application service operator then calls the application service control plane (not shown), which reuses the infrastructure DLB instance 534 ("dlb-service-app1") and adds a Service2 VIP as "cluster-service-2" with members that include IP addresses of Service2's replicas. The application service control plane also reuses the infrastructure DNS instance 532 ("ddns-service-app1") and creates a record B that maps "service-2" to "cluster-service-2-vip".

App1-inst1 550 and App1-inst2 555 are then deployed to pods 540 and 545, respectively, on the host node 501. The application service control plane automatically pushes App1 DNS and DLB instances 532 and 534 to the application service agent 510 of the host node 501. In the diagram 500a, the App1-inst1 550 sends a DNS query for "Service1" and/or for "Service2" (e.g., as represented by line 580), and the DNS query is intercepted by the App1 DNS 532. The App1 DNS 532 performs a lookup based on the query for "Service1" and/or "Service2", matches to the stored record A for "service-1" and/or to the stored record B for "service-2", and responds to the DNS query by App1-inst1 550 with the Service1 VIP "cluster-service-1" and/or the Service2 VIP "cluster-service-2" (e.g., as represented by the line 580).

Similarly, the App1-inst2 555 sends a DNS query for "Service1" and/or for "Service2" (e.g., as represented by line 585), which is intercepted by the App1 DNS 532. The App1 DNS 532 performs a lookup based on the query, and matches the query to the stored record A for "service-1" and/or to the stored record B for "service-2". The App1 DNS 532 then responds (e.g., as represented by the line 585) to the DNS query by App1-inst2 555 with the Service1 VIP "cluster-service-1" and/or the Service2 VIP "cluster-service-2".

In the diagram 500b, App1-inst1 550 and App1-inst2 555 then use the obtained Service1 VIP and/or Service2 VIP to call the "service-1" service and/or the "service-2" service (e.g., as represented by the lines 590 and 595, respectively). The service traffic for each App1 instance 550 and 555 is intercepted by the service insertion module 518 to determine whether any policy rules are to be applied to the service traffic (e.g., based on five-tuple attributes of the service traffic flows), and to apply those policy rules to the service traffic.

After the service insertion module 518 has processed the service traffic, the service traffic flows are then intercepted by the App1 DLB 534, which redirects the intercepted service traffic to the corresponding Service1 instances 570a executed by pod 560 on host node 502 and 570b executed by pod 564 on host node 503, and/or to the corresponding Service2 instances 575a executed by pod 562 on host node 502 and 575b executed by pod 566 on host node 503.

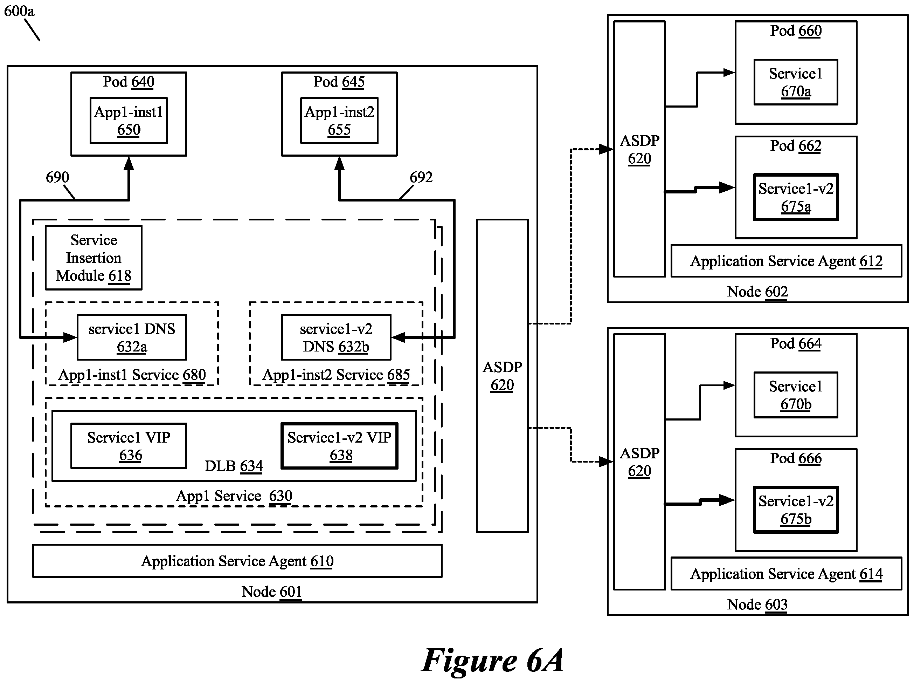

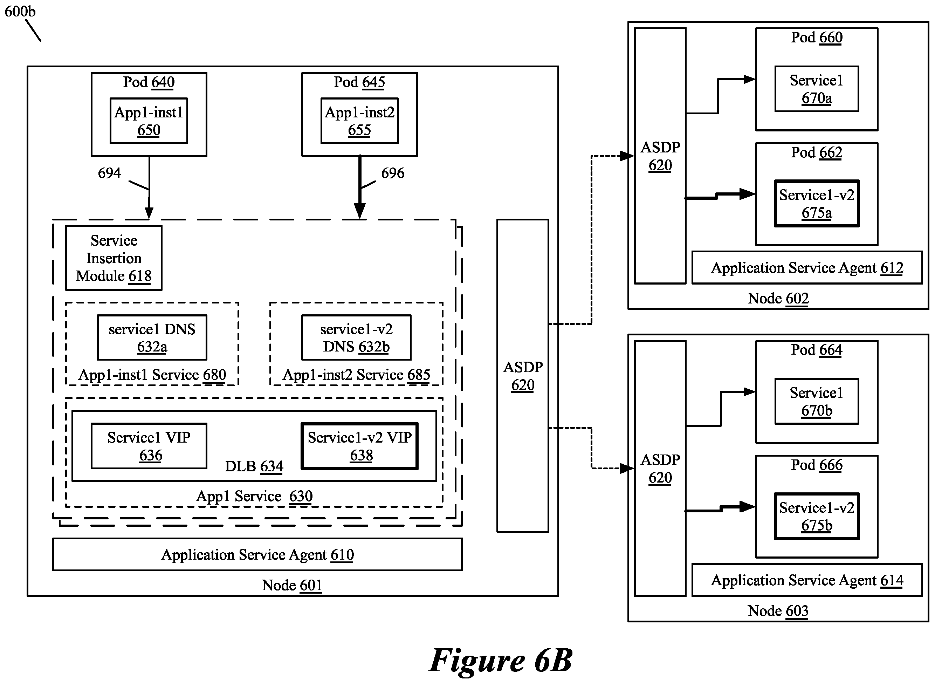

**Figures 6A-6B** illustrate diagrams 600a and 600b showing an example of an instance level of service mesh. As shown, each diagram 600a and 600b includes three host nodes 601, 602, and 603. Each host node 601-603 includes the application service data plane 620 as well as a respective application service agent 610, 612, and 614.

The host node 601 in each diagram 600a and 600b also includes App1 service 630 visible to all instances of Appl, App1-inst1 service 680 visible to instance1 of Appl, App1-inst2 service 685 visible to instance2 of Appl, and pods 640 and 645 for executing App1-inst1 650 and App1-inst2 655, respectively. The instance service level 680-685 also includes a service insertion module 618.

The DLB 634 includes a Service1 VIP 636 and Service2 VIP 638, while the App1-inst1 service 680 includes a service1 DNS 632a, and App1-inst2 service 685 includes a service1-v2 DNS 632b. The host node 602 also includes pods 660 and 662 for executing Service1 instance 670a and Service1-v2 instance 675a, respectively. The host node 603 includes pods 664 and 666 for executing Service1 instance 670b and Service1-v2 instance 675b, respectively.

Here, App1-inst1 650 and App1-inst2 655 desire to use different versions of Service1. As such, to realize and configure the services, Service1 first declares it is providing App1 service "service-1" with an associated backend service "cluster-service-1-vip". The application service operator (not shown) receives metadata including service-discovery information "service-1 to cluster-service-1-vip" and load balancing information from "clusterservice-1-vip". The application service operator then calls the application service control plane (not shown), which creates (1) a DLB instance 634 ("dlb-service-app1") that includes the Service1 VIP "cluster-service-1" with members including IP addresses of Service1's replicas, and (2) a DNS instance ("ddns-service-app1") along with a record A that maps "service-1" to "cluster-service-1-vip".

Next, "Service1-v2" declares it is providing a second version, v2, of the App1 service "service-1" with an associated backend service "cluster-service-1-v2-vip". The application service operator (not shown) receives metadata including service-discovery information "service-1-v2 to cluster-service-1-v2-vip" and load balancing information from "cluster-service-1-v2-vip", and calls the application service control plane (not shown). The application service control plane reuses the infrastructure DLB instance 634 ("dlb-service-app1") and adds the Service1-v2 VIP as "cluster-service-1-v2" with members that include IP addresses of Service1-v2's replicas. The application service control plane also reuses the infrastructure DNS instance "ddns-service-app1" and creates a record B that maps "service-1-v2" to "cluster-service-1-v2-vip".

Next, App1-inst1 650 and App1-inst2 655 are deployed to respective pods 640 and 645 on the host node 601. App1-inst1 650 claims the default version of Service1, while App1-inst2 requests the second version, v2, of Service1. The application service control plane (not shown) automatically pushes the App1 DNS and DLB instances 632a-632b and 634 to the application service agent 610 on the host node 601. The application service control plane pushes the "App1-inst1" instance service 680 for "App1-inst1" use, and pushes the "App1-inst2" instance service 685 for "App1-inst2" use.

In the diagram 600a, App1-inst1 650 sends a DNS query for Service1 (e.g., as represented by the line 690), which is intercepted by the instance service DNS 632a . The instance service DNS 632a matches the requested Service1 from the DNS request to the record A for "service-1", and responds to the query from App1-inst1 650 with the VIP for "cluster-serivce-1" (e.g., as represented by the line 690). App1-inst2 655 sends a DNS query for Service1-v2 (e.g., as represented by the line 692), which is intercepted by instance service DNS 632b. The instance service DNS 632b matches the Service1-v2 from the query to the record B for "service-1-v2", and responds to the query with the VIP for "cluster-serivce-1-v2" (e.g., as represented by the line 692).

In the diagram 600b, App1-inst1 650 uses the VIP for "cluster-serivce-1" to call the "service-1" service (e.g., as represented by the line 694). The service traffic is first intercepted by the service insertion module 618 to determine whether any policy rules are to be applied to the service traffic, and to apply those policy rules to the service traffic. After processing by the service insertion module 618, the service traffic is then intercepted by App1 DLB "service1" VIP 636 of the DLB 634 and then sent out to corresponding Service1 instances 670a and 670b executed by respective pods 660 and 664 on respective host nodes 602 and 603. App1-inst2 655 uses the Service1-v2 VIP to call the "service-1-v2" service (e.g., as represented by the line 696). The service traffic is intercepted by App1 DLB "service1-v2" VIP 638 of the DLB 634, and is then sent out to corresponding Service1-v2 instances 675a and 675b executed by respective pods 662 and 666 on respective host nodes 602 and 603.

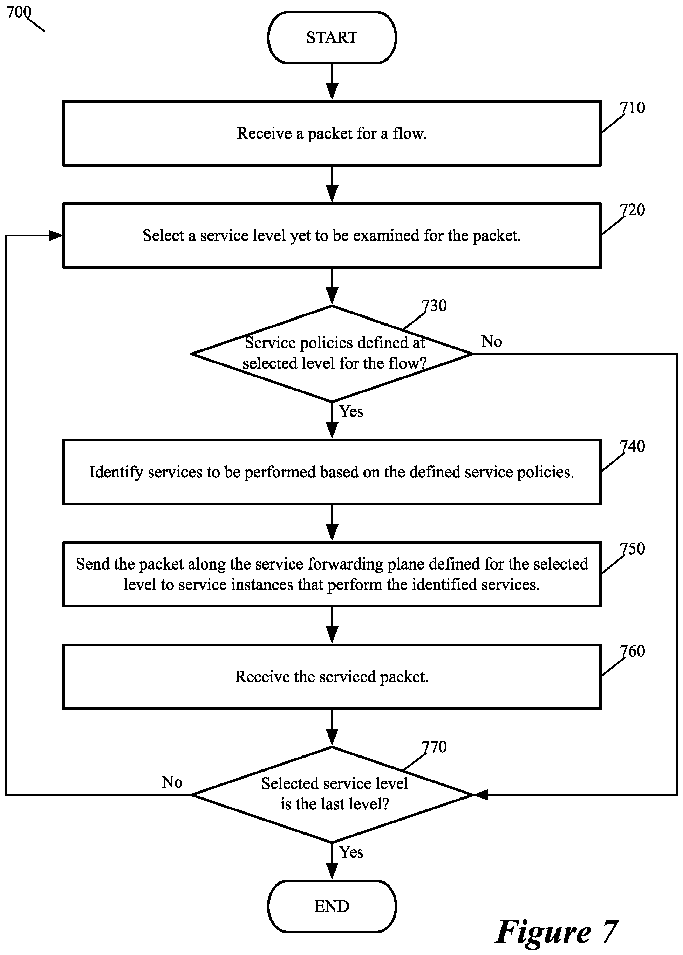

**Figure 7** illustrates a process 700 performed by the service insertion module of some embodiments to identify policy rules provided by the application service agent that specify data plane services to be applied to packet flows from application instances. The process 700 starts when the process receives (at 710) a packet for a flow. For instance, in the examples described above, application instances use the VIPs provided by DNS proxies at each level of the service mesh to send packet flows to the service instances associated with the provided VIPs. These packets are then received (e.g., intercepted) by the service insertion module.

The process 700 selects (at 720) a service level yet to be examined for the packet. The services levels are the service mesh data plane levels described above, including the infrastructure services level, tenant services level, application services level, and instance services level. In some embodiments, the process selects a service level based on a service requested by the packet. For example, in some embodiments, an application instance calls two or more services of two or more service mesh levels (e.g., calls a tenant level "tenant-1-service-1" service, and calls an infrastructure level "db-service-1" service), and the service insertion module selects from the service mesh levels of the services called (e.g., selects tenant level, or infrastructure level).

The process 700 determines (at 730) whether any service policies are defined at the selected service level for the flow to which the received packet belongs. As described above, the service insertion module of some embodiments uses any part of the flow's five-tuple (e.g., any combination of source IP address, destination IP address, source port, destination port, and protocol) as a set of attributes to match the flow to one or more policy rules having a flow identifier that matches the set of attributes. The policy rules, in some embodiments, specify one or more data plane services to be applied to packets of the flow. Examples of these data plane services include service-discovery, load balancing, tracing, and securities (e.g., IDS, IPS, etc.), in some embodiments.

When the process 700 determines (at 730) that there are no service policies defined at the selected level for the flow, the process 700 transitions to determine (at 770) whether the selected level is the last level. That is, the process 700 determines whether there are any levels yet to be examined for the packet. When there are levels yet to be examined, the process 700 returns to select (at 720) a service level yet to be examined for the packet. Otherwise, when there are no more levels to be examined, the process 700 ends.

When the process 700 determines (at 730) that there is at least one service policy defined at the selected level for the flow, the process 700 transitions to identify (at 740) services to be performed based on the defined service policies. In some embodiments, different attributes of the flow's five-tuple identifier match to different policy rules. For example, in some embodiments, the destination IP (i.e., destination VIP) of the packet matches to a first policy rule defined for all packet flows destined to that VIP, and the full five-tuple (i.e., all five attributes of the five-tuple) match to a second policy rule defined for that specific packet flow.

In some embodiments, the service insertion module sets one or more flags (e.g., priority and/or visibility flags) in a header of the packet that identify the service or services to be performed on the packet flow as specified by the one or more policy rules to which the packet has matched. These flags are used to indicate to the application service data path which data plane services the application service data path is to perform on the packet, according to some embodiments.

The process 700 sends (at 750) the packet along the service forwarding plane defined for the selected service level to service instances that perform the identified services. In some embodiments, the data plane services are applied by a data plane service chain. The data plane service chain of some embodiments is implemented by a single machine (e.g., a single SVM (service virtual machine)), while in other embodiments, the data plane service chain is implemented by two or more data plane service modules (e.g., two or more SVMs, service pods, service containers, etc.).

The process 700 then receives (at 760) the serviced packet, and determines (at 770) whether the selected service level is the last level. When the selected service level is not the last level, the process 700 returns to select (at 720) a service level yet to be examined for the packet. Otherwise, when the selected level is the last level, the process 700 ends. Additional details regarding the service insertion module and service rule processing can be found in U.S. Patent No. 11,194,610, filed July 18, 2019, and titled "Service Rule Processing and Path Selection at the Source". U.S. Patent No. 11,194,610 is incorporated herein by reference.

Many of the above-described features and applications are implemented as software processes that are specified as a set of instructions recorded on a computer readable storage medium (also referred to as computer readable medium). When these instructions are executed by one or more processing unit(s) (e.g., one or more processors, cores of processors, or other processing units), they cause the processing unit(s) to perform the actions indicated in the instructions. Examples of computer readable media include, but are not limited to, CD-ROMs, flash drives, RAM chips, hard drives, EPROMs, etc. The computer readable media does not include carrier waves and electronic signals passing wirelessly or over wired connections.

In this specification, the term "software" is meant to include firmware residing in read-only memory or applications stored in magnetic storage, which can be read into memory for processing by a processor. Also, in some embodiments, multiple software inventions can be implemented as sub-parts of a larger program while remaining distinct software inventions. In some embodiments, multiple software inventions can also be implemented as separate programs. Finally, any combination of separate programs that together implement a software invention described here is within the scope of the invention. In some embodiments, the software programs, when installed to operate on one or more electronic systems, define one or more specific machine implementations that execute and perform the operations of the software programs.

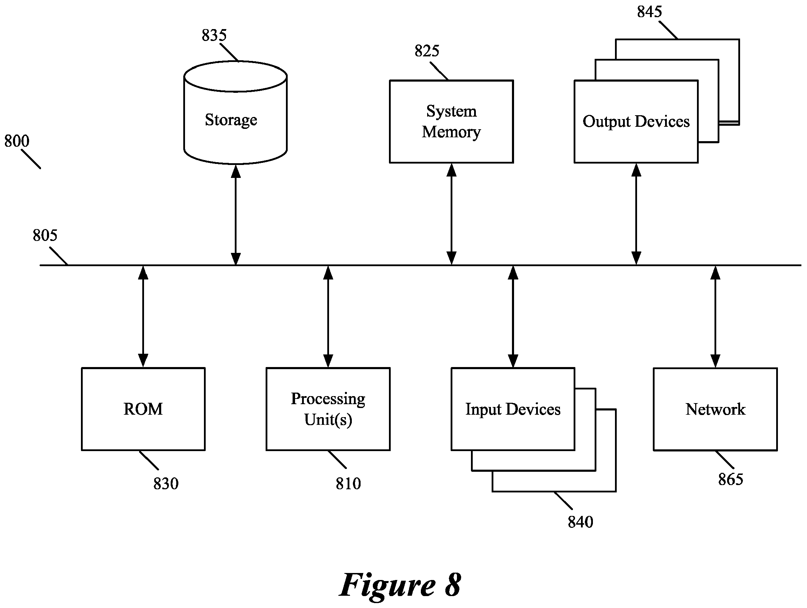

**Figure 8** conceptually illustrates a computer system 800 with which some embodiments of the invention are implemented. The computer system 800 can be used to implement any of the above-described computers and servers. As such, it can be used to execute any of the above described processes. This computer system includes various types of non-transitory machine readable media and interfaces for various other types of machine readable media. Computer system 800 includes a bus 805, processing unit(s) 810, a system memory 825, a read-only memory 830, a permanent storage device 835, input devices 840, and output devices 845.

The bus 805 collectively represents all system, peripheral, and chipset buses that communicatively connect the numerous internal devices of the computer system 800. For instance, the bus 805 communicatively connects the processing unit(s) 810 with the read-only memory 830, the system memory 825, and the permanent storage device 835.

From these various memory units, the processing unit(s) 810 retrieve instructions to execute and data to process in order to execute the processes of the invention. The processing unit(s) may be a single processor or a multi-core processor in different embodiments. The read-only-memory (ROM) 830 stores static data and instructions that are needed by the processing unit(s) 810 and other modules of the computer system. The permanent storage device 835, on the other hand, is a read-and-write memory device. This device is a non-volatile memory unit that stores instructions and data even when the computer system 800 is off. Some embodiments of the invention use a mass-storage device (such as a magnetic or optical disk and its corresponding disk drive) as the permanent storage device 835.

Other embodiments use a removable storage device (such as a flash drive, etc.) as the permanent storage device. Like the permanent storage device 835, the system memory 825 is a read-and-write memory device. However, unlike storage device 835, the system memory is a volatile read-and-write memory, such a random access memory. The system memory stores some of the instructions and data that the processor needs at runtime. In some embodiments, the invention's processes are stored in the system memory 825, the permanent storage device 835, and/or the read-only memory 830. From these various memory units, the processing unit(s) 810 retrieve instructions to execute and data to process in order to execute the processes of some embodiments.

The bus 805 also connects to the input and output devices 840 and 845. The input devices enable the user to communicate information and select commands to the computer system. The input devices 840 include alphanumeric keyboards and pointing devices (also called "cursor control devices"). The output devices 845 display images generated by the computer system. The output devices include printers and display devices, such as cathode ray tubes (CRT) or liquid crystal displays (LCD). Some embodiments include devices such as a touchscreen that function as both input and output devices.

Finally, as shown in **Figure 8****,** bus 805 also couples computer system 800 to a network 865 through a network adapter (not shown). In this manner, the computer can be a part of a network of computers (such as a local area network ("LAN"), a wide area network ("WAN"), or an Intranet, or a network of networks, such as the Internet. Any or all components of computer system 800 may be used in conjunction with the invention.

Some embodiments include electronic components, such as microprocessors, storage and memory that store computer program instructions in a machine-readable or computer-readable medium (alternatively referred to as computer-readable storage media, machine-readable media, or machine-readable storage media). Some examples of such computer-readable media include RAM, ROM, read-only compact discs (CD-ROM), recordable compact discs (CD-R), rewritable compact discs (CD-RW), read-only digital versatile discs (e.g., DVD-ROM, dual-layer DVD-ROM), a variety of recordable/rewritable DVDs (e.g., DVD-RAM, DVD-RW, DVD+RW, etc.), flash memory (e.g., SD cards, mini-SD cards, micro-SD cards, etc.), magnetic and/or solid state hard drives, read-only and recordable Blu-Ray^{®} discs, ultra-density optical discs, and any other optical or magnetic media. The computer-readable media may store a computer program that is executable by at least one processing unit and includes sets of instructions for performing various operations. Examples of computer programs or computer code include machine code, such as is produced by a compiler, and files including higher-level code that are executed by a computer, an electronic component, or a microprocessor using an interpreter.

While the above discussion primarily refers to microprocessor or multi-core processors that execute software, some embodiments are performed by one or more integrated circuits, such as application specific integrated circuits (ASICs) or field programmable gate arrays (FPGAs). In some embodiments, such integrated circuits execute instructions that are stored on the circuit itself.

As used in this specification, the terms "computer", "server", "processor", and "memory" all refer to electronic or other technological devices. These terms exclude people or groups of people. For the purposes of the specification, the terms display or displaying means displaying on an electronic device. As used in this specification, the terms "computer readable medium," "computer readable media," and "machine readable medium" are entirely restricted to tangible, physical objects that store information in a form that is readable by a computer. These terms exclude any wireless signals, wired download signals, and any other ephemeral or transitory signals.

While the invention has been described with reference to numerous specific details, one of ordinary skill in the art will recognize that the invention can be embodied in other specific forms without departing from the spirit of the invention. Thus, one of ordinary skill in the art would understand that the invention is not to be limited by the foregoing illustrative details, but rather is to be defined by the appended claims.

## Claims

1. A method of implementing a virtualization software-based service mesh for a network comprising a plurality of host computers, each host computer comprising a set of virtualization software that executes a set of application instances, the method comprising:
for each host computer:
deploying, to the set of virtualization software of the host computer, (i) an application service agent and (ii) an application service data plane that comprises a set of data plane service mesh levels;
configuring the application service agent to apply policy rules defined for application flows associated with the set of application instances to the application flows on the application service data plane; and
configuring the application service data plane to forward the application flows for the set of application instances to and from services provided at each data plane service mesh level in the set of data plane service mesh levels according to the policy rules applied by the application service agent.

2. The method of claim 1, wherein configuring the application service agent to apply the policy rules comprises configuring the application service agent (i) to receive policy configurations from a central application service control plane server, (ii) to convert the received policy configurations into policy rules, and (iii) to apply the policy rules to application flows on the application service data plane.

3. The method of claim 1 or 2, wherein the set of data plane service mesh levels comprises (i) an infrastructure services first level, (ii) a tenant services second level, (iii) an application services third level, and (iv) an instance services fourth level.

4. The method of claim 3, wherein the infrastructure services first level comprises common services that are accessible to each application instance in the set of application instances.

5. The method of claim 3 or 4, wherein the set of application instances comprises a first subset of application instances belonging to a first tenant and a second subset of applications instances belonging to a second tenant, wherein the tenant services second level comprises a first set of tenant services for the first subset of application instances of the first tenant and a second set of tenant services for the second subset of application instances of the second tenant, wherein for example the first set of tenant services are not accessible to the second subset of application instances and the second set of tenant services are not accessible to the first subset of application instances.

6. The method of any of claims 3 to 5, wherein the set of application instances comprises at least a first subset of application instances associated with a first application and a second subset of application instances associated with a second application, wherein the application services third level comprises a first set of application services for the first subset of application instances associated with the first application and a second set of application services for the second subset of application instances associated with the second application, wherein for example the first set of application services is accessible to the first subset of application instances and is not accessible to the second subset of application instances, and the second set of application services is accessible to the second subset of application instances and is not accessible to the first subset of application instances.

7. The method of any of claims 3 to 6, wherein:
the set of application instances comprises at least first and second subsets of application instances associated with a first application;
the instance services fourth layer comprises a first set of instance services that are a first version of a particular set of instance services, and a second set of instance services that are a second version of the particular set of instance services; and
the first set of instance services are accessible only to the first subset of application instances associated with the first application and the second set of instance services are accessible only to the second subset of application instances associated with the first application.

8. The method of any of claims 1 to 7, wherein configuring the application service data plane further comprises configuring the application service data plane to implement a set of data plane services, wherein the set of data plane services comprises at least a service discovery service, a load balancing service, a tracing service, and a securities service.

9. The method of claim 8, wherein each policy rule comprises a set of match attributes and one or more data plane services to be applied to application flows that match to the set of match attributes, wherein configuring the application service agent to apply policy rules defined for the application flows comprises configuring the application service agent to provide the policy rules to a service insertion module of the application service data plane, wherein the service insertion module (i) matches a set of flow attributes of an application flow to one or more sets of match attributes of one or more policy rules, and (ii) applies the matched policy rules to the application flow.

10. The method of claim 9, wherein the set of flow attributes comprises a five-tuple identifier of the application flow, the five-tuple identifier comprises a source IP (Internet Protocol) address of the application flow, a destination IP address of the application flow, a source port of the application flow, a destination port of the application flow, and a protocol of the application flow.

11. The method of claim 9 or 10, wherein the service insertion module applies the matched policy rules to the application flow by setting one or more flags in headers of packets of the application flow, the one or more flags corresponding to the one or more data plane services specified by the matched policy rules.

12. The method of claim 11, wherein configuring the application service data plane to forward application flows according to the policy rules applied by the application service agent comprises configuring the application service data plane to apply data plane services corresponding to the one or more flags in the headers of the packets of the application flow.

13. The method of claim 12, wherein the policy rules defined for the application flows comprise policy rules defined for application flows at each data plane service mesh level.

14. The method of any of claims 1 to 13, wherein configuring the application service data plane further comprises:
deploying, for each service mesh level of the set of data plane service mesh levels, (i) a distributed DNS (domain name service) proxy server and (ii) a distributed load balancer;
configuring the distributed DNS proxy server to intercept and respond to DNS requests from the set of application instances that are associated with services provided by the service mesh level; and
configuring the distributed load balancer to intercept service calls associated with services provided by the service mesh level and redirect the service calls to service instances on one or more of the plurality of host computers.

15. The method of any of claims 1 to 14, comprising at least one of the following features: wherein deploying the application service data plane comprises implementing the application service data plane as a set of one or more machine instances on the set of virtualization software of the host computer, wherein for example the set of machine instances comprises a set of pods;
wherein deploying the application service data plane comprises one of (i) integrating the application service data plane in a kernel of the set of virtualization software of the host computer, and (ii) implementing the application service data plane as a set of one or more machine instances on the set of virtualization software of the host computer and integrating the application service data plane in a kernel of the set of virtualization software;
wherein the set of virtualization software comprises a hypervisor.
